# EUROPEAN PATENT APPLICATION

(11) **EP 4 245 497 A1**
(43) Date of publication of application: **20.09.2023**
(21) Application number: 21891480.2
(22) Date of filing: 10.09.2021
(51) Int. Cl.: B29C 33/12, B29C 43/18, B29C 43/34, B29C 43/36

(54) **COMPRESSION MOLD, RESIN MOLDING DEVICE, RESIN MOLDING SYSTEM, AND METHOD FOR MANUFACTURING RESIN MOLDED PRODUCT**

(30) Priority: 11.11.2020 JP 2020187831
(71) Applicant: Towa Corporation, Kyoto-shi, Kyoto 601-8105 (JP)
(72) Inventor: YOSHIDA, Yusuke, Kyoto-shi Kyoto 601-8105 (JP); ONISHI, Yohei, Kyoto-shi Kyoto 601-8105 (JP)
(74) Representative: Vossius & Partner Patentanwälte Rechtsanwälte mbB
(86) International application number: PCT/JP2021/033285
(87) International publication number: WO 2022/102232

(57) **Abstract**

A compression mold (10) includes a first mold (110) and a second mold (120). The first mold (110) includes a side surface member (111) and a bottom surface member (112). The side surface member (111) includes a step height (113) on a bottom surface member (112) side of the side surface member (111). The step height (113) includes a first surface (111a) of the side surface member (111), a second surface (111b) that extends from the first surface (111a) toward the bottom surface member (112), and a third surface (111c) that extends downward from the second surface (111b). The bottom surface member (112) includes an upper surface (112a) where a resin material (202) can be arranged and a slide surface (112b) that extends downward from the upper surface (112a) and is slidable with respect to the third surface (111c) of the side surface member (111). The third surface (111c) of the side surface member (111) is not exposed while the resin material (202) is supplied.

## Description

### TECHNICAL FIELD

The present disclosure relates to a compression mold, a resin molding apparatus, a resin molding system, and a method of manufacturing a resin-molded product.

### BACKGROUND ART

An electronic component such as a semiconductor chip mounted on a substrate has conventionally been sealed with a resin by compression molding with the use of a resin molding apparatus including a compression mold composed of upper and lower molds.

For example, PTL 1 discloses an object resin sealing method of sealing with a resin, an object in molds that face each other, the object resin sealing method including a first procedure to release the molds from a portion of the object not sealed with the resin to set a state that only the resin is in contact with a specific mold of the molds and a second procedure to wait for molding and shrinkage of the resin in this state.

### CITATION LIST

### PATENT LITERATURE

PTL 1: Japanese Patent Laying-Open No. 2005-305951

### SUMMARY OF INVENTION

### TECHNICAL PROBLEM

According to the resin sealing method described in PTL 1, a release film for releasing the molds from the object does not have to be used.

In the resin sealing method described in PTL 1, however, when a compression mold is slid with respect to a lower frame-shaped mold in compression molding of the object with the upper mold and the lower mold, a heated and molten liquid resin may be introduced in between the lower frame-shaped mold and the compression mold. When the liquid resin is introduced in between the molds, some of the liquid resin returns to the molds and is cured, and thereafter causes resin residues and resin flashes. The resin residues cause contamination of the mold. The resin flashes introduced in a resin-molded product cause defective products. Therefore, the lower mold has to frequently be disassembled and cleaned to take out the resin residues.

In order to prevent the liquid resin from being introduced in between the frame-shaped mold and the compression mold, a release film may also be provided in the frame-shaped mold.

When a frame height of the frame-shaped mold is higher than the compression mold, however, the release film may not sufficiently be extended or may be broken. Even if the release film can be extended, a part of the extended release film may be crinkled at the time of clamping of the upper mold and the lower mold, and may be introduced in the resin in the resin-molded product.

### SOLUTION TO PROBLEM

According to an embodiment disclosed herein, a compression mold including a first mold and a second mold arranged above the first mold as facing the first mold can be provided, in which the first mold includes a side surface member and a bottom surface member, the side surface member includes a step height on a bottom surface member side of the side surface member, the step height includes a first surface of the side surface member, a second surface that extends from the first surface toward the bottom surface member, and a third surface that extends downward from the second surface, the bottom surface member includes an upper surface where a resin material can be arranged and a slide surface that extends downward from the upper surface and is slidable with respect to the third surface of the side surface member, and the third surface of the side surface member is not exposed while the resin material is supplied.

According to the embodiment disclosed herein, a resin molding apparatus including the compression mold can be provided.

According to the embodiment disclosed herein, a resin molding system including the resin molding apparatus can be provided.

According to the embodiment disclosed herein, a method of manufacturing a resin-molded product that includes preparing a compression mold can be provided, in which the compression mold includes a first mold and a second mold arranged above the first mold as facing the first mold, the first mold includes a side surface member and a bottom surface member, the side surface member includes a step height on a bottom surface member side of the side surface member, the step height includes a first surface of the side surface member, a second surface that extends from the first surface toward the bottom surface member, and a third surface that extends downward from the second surface, and the bottom surface member includes an upper surface where a resin material can be arranged and a slide surface that extends downward from the bottom surface and is slidable with respect to the third surface of the side surface member. The method of manufacturing a resin-molded product further includes setting an object on the second mold, supplying a resin material while the third surface of the side surface member is not exposed, and resin-molding the object with the resin material.

### ADVANTAGEOUS EFFECTS OF INVENTION

According to the embodiment disclosed herein, a compression mold, a resin molding apparatus, a resin molding system, and a method of manufacturing a resin-molded product that allow suppression of introduction of a resin in between constituent members of the compression mold without the use of a release film can be provided.

### BRIEF DESCRIPTION OF DRAWINGS

Fig. 1 is a functional block diagram of an exemplary resin molding system in a first embodiment.
Fig. 2 is a schematic cross-sectional view of an exemplary resin molding apparatus in the first embodiment.
Fig. 3 is a schematic cross-sectional view for illustrating a part of a step in an exemplary method of manufacturing a resin-molded product in the first embodiment.
Fig. 4 is a schematic cross-sectional view for illustrating another part of the step in the exemplary method of manufacturing a resin-molded product in the first embodiment.
Fig. 5 is a schematic cross-sectional view for illustrating yet another part of the step in the exemplary method of manufacturing a resin-molded product in the first embodiment.
Fig. 6 is a schematic cross-sectional view for illustrating still another part of the step in the exemplary method of manufacturing a resin-molded product in the first embodiment.
Fig. 7 is a schematic cross-sectional view of an exemplary resin-molded object in the first embodiment.
Fig. 8 is a schematic cross-sectional view of an exemplary resin-molded product in the first embodiment.
Fig. 9 (a) is a schematic cross-sectional view of a first mold while a resin material is supplied in a conventional resin molding apparatus and (b) is a schematic cross-sectional view of the first mold during resin molding in the conventional resin molding apparatus.
Fig. 10 shows a photograph of a portion between an inner peripheral surface of a side surface member and a slide surface of a bottom surface member after resin molding in the conventional resin molding apparatus including the first mold shown in Fig. 9 (a) and (b).
Fig. 11 shows a photograph of a resin-molded product resin-molded with the use of the conventional resin molding apparatus including the first mold shown in Fig. 9 (a) and (b).
Fig. 12 (a) is a schematic cross-sectional view of the first mold while a resin material is supplied in the resin molding apparatus in the first embodiment and (b) is a schematic cross-sectional view of the first mold during resin molding in the resin molding apparatus in the first embodiment.
Fig. 13 shows a photograph of a portion between the inner peripheral surface of the side surface member and the slide surface of the bottom surface member after resin molding in the resin molding apparatus in the first embodiment.
Fig. 14 shows a photograph of a resin-molded product resin-molded with the use of the resin molding apparatus in the first embodiment.
Fig. 15 (a) is a schematic cross-sectional view of the first mold while a resin material is supplied in the resin molding apparatus in a second embodiment and (b) is a schematic cross-sectional view of the first mold during resin molding in the resin molding apparatus in the second embodiment.
Fig. 16 is a schematic enlarged cross-sectional view of the first mold shown in Fig. 15 (b).
Fig. 17 (a) is a schematic cross-sectional view of the first mold while a resin material is supplied in the resin molding apparatus in a third embodiment and (b) is a schematic cross-sectional view of the first mold during resin molding in the resin molding apparatus in the third embodiment.
Fig. 18 (a) is a schematic cross-sectional view of the first mold while a resin material is supplied in the resin molding apparatus in a fourth embodiment and (b) is a schematic cross-sectional view of the first mold during resin molding in the resin molding apparatus in the fourth embodiment.
Fig. 19 is a schematic plan view of an object resin-molded with the resin molding apparatus in the fourth embodiment.
Fig. 20 is a schematic plan view of a resin-molded product manufactured with the resin molding apparatus in the fourth embodiment.
Fig. 21 (a) is a schematic cross-sectional view of the first mold while a resin material is supplied in the resin molding apparatus in a fifth embodiment and (b) is a schematic cross-sectional view of the first mold during resin molding in the resin molding apparatus in the fifth embodiment.

### DESCRIPTION OF EMBODIMENTS

An embodiment will be described below. In the drawings used for description of the embodiment, identical or corresponding elements have identical reference characters allotted.

### <First Embodiment>

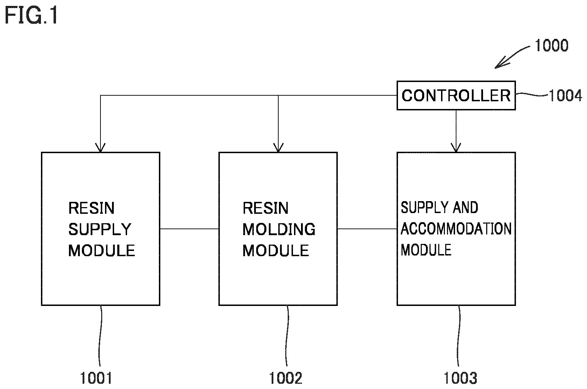

Fig. 1 shows a functional block diagram of an exemplary resin molding system in a first embodiment. A resin molding system 1000 shown in Fig. 1 includes a resin supply module 1001 capable of supplying a resin material, a resin molding module 1002 capable of manufacturing a resin-molded product by compression molding an object, a supply and accommodation module 1003 capable of supplying a yet-to-be-molded object, where a compression-molded resin-molded product can be accommodated, and a controller 1004. Controller 1004 is configured to control resin supply module 1001, resin molding module 1002, and supply and accommodation module 1003.

Resin supply module 1001, resin molding module 1002, and supply and accommodation module 1003 are attachable to and removable from one another and also replaceable.

Resin supply module 1001 includes a resin material supply apparatus capable of supplying a resin material to resin molding module 1002.

Resin molding module 1002 includes a resin molding apparatus in the embodiment. Details of a resin molding apparatus 1 in the embodiment will be described later. A plurality of resin molding modules 1002 may be provided.

Supply and accommodation module 1003 includes a supply apparatus capable of supplying an object yet to be resin-molded and an accommodation apparatus where a compression-molded resin-molded product can be accommodated.

The resin-molded product compression-molded with a resin by the resin molding apparatus is accommodated in supply and accommodation module 1003.

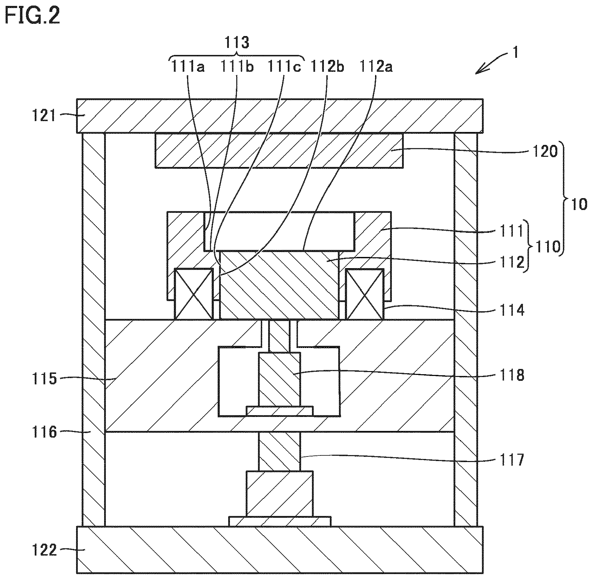

Fig. 2 shows a schematic cross-sectional view of the resin molding apparatus in the first embodiment which represents an exemplary resin molding apparatus in the embodiment. As shown in Fig. 2, resin molding apparatus 1 in the first embodiment includes a compression mold 10. Compression mold 10 includes a first mold 110 and a second mold 120 arranged above first mold 110 as facing first mold 110.

First mold 110 includes a side surface member 111 and a bottom surface member 112. Side surface member 111 is arranged to surround bottom surface member 112. Side surface member 111 includes an inner peripheral surface located on a bottom surface member 112 side of side surface member 111, and the inner peripheral surface includes a step height 113. Step height 113 includes a first surface 11 1a of side surface member 111, a second surface 111b that extends from first surface 111a toward bottom surface member 112, and a third surface 111c that extends downward from second surface 111b. Each of first surface 111a and third surface 111c is perpendicular to second surface 111b.

Bottom surface member 112 includes an upper surface 112a where a resin material can be arranged and a slide surface 112b that extends downward from a periphery of upper surface 112a. Slide surface 112b is in contact with third surface 111c of side surface member 111 and slidable with respect to third surface 111c of side surface member 111.

Resin molding apparatus 1 further includes an upper fixed plate 121, a lower fixed plate 122, and a moving plate 115. A plurality of pillar portions 116 vertically extend between upper fixed plate 121 and lower fixed plate 122. The plurality of pillar portions 116 have one ends fixed to upper fixed plate 121 and have the other ends fixed to lower fixed plate 122. An elastic member 114 is provided between side surface member 111 and moving plate 115.

Resin molding apparatus 1 further includes a first drive mechanism 117 among the plurality of pillar portions 116 on lower fixed plate 122. First drive mechanism 117 can move moving plate 115 upward and downward. Upper fixed plate 121 and lower fixed plate 122 are fixed and immobilized. Therefore, moving plate 115 is movable relatively to upper fixed plate 121 and lower fixed plate 122. First drive mechanism 117 can move upward and downward, that is, can lift and lower, side surface member 111 and bottom surface member 112 with moving plate 115 being interposed.

Resin molding apparatus 1 further includes a second drive mechanism 118 in the inside of moving plate 115. Second drive mechanism 118 can move upward and downward, that is, can lift and lower, bottom surface member 112. Bottom surface member 112 is thus movable relatively to side surface member 111.

A method of manufacturing a resin-molded product in the first embodiment which represents an exemplary method of manufacturing a resin-molded product in the embodiment will be described below with reference to schematic cross-sectional views in Figs. 2 to 8. Initially, as shown in Fig. 2, a step of preparing compression mold 10 is performed. The step of preparing compression mold 10 can be performed, for example, by setting first mold 110 on moving plate 115 and setting second mold 120 on upper fixed plate 121.

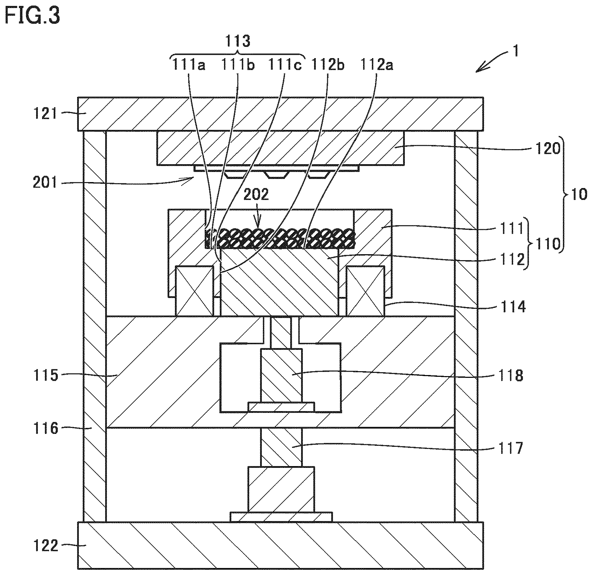

Then, as shown in Fig. 3, a step of setting an object 201 on second mold 120 is performed. The step of setting object 201 on second mold 120 can be performed, for example, by holding object 201 on second mold 120 by suction. Examples of object 201 include a lead frame, a substrate, a substrate made of a semiconductor (a silicon wafer or the like), a substrate made of a metal, a substrate made of glass, a substrate made of ceramic, or a wiring board.

Then, as shown in Fig. 3, a step of supplying a resin material 202 while third surface 111c of side surface member 111 is not exposed is performed. The step of supplying resin material 202 while third surface 111c of side surface member 111 is not exposed can be performed, for example, by supplying resin material 202 into a cavity defined by first surface 111a and second surface 11 1b of side surface member 111 and upper surface 112a of bottom surface member 112 such that third surface 111c of side surface member 111 and resin material 202 do not come in contact with each other.

In the present embodiment, the order of the step of setting object 201 on second mold 120 and the step of supplying resin material 202 while third surface 111c of side surface member 111 is not exposed is not particularly limited.

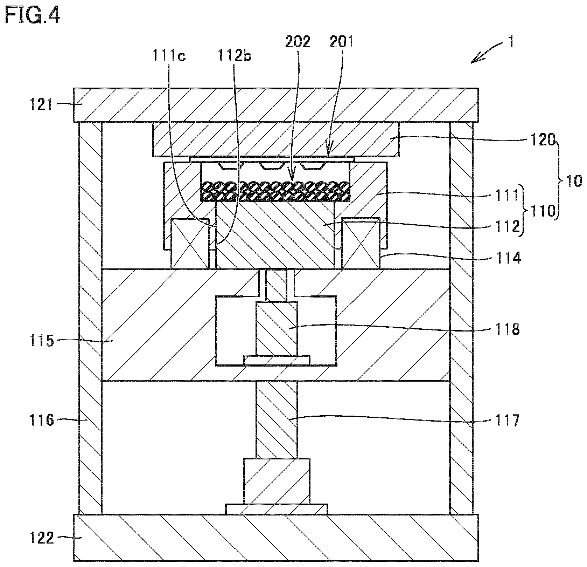

Then, as shown in Fig. 4, a step of moving first mold 110 toward second mold 120 is performed. The step of moving first mold 110 toward second mold 120 is performed, for example, by movement of moving plate 115 in a direction toward second mold 120 by first drive mechanism 117.

Then, a step of resin-molding object 201 with resin material 202 is performed. The step of resin-molding object 201 with resin material 202 can be performed, for example, as below.

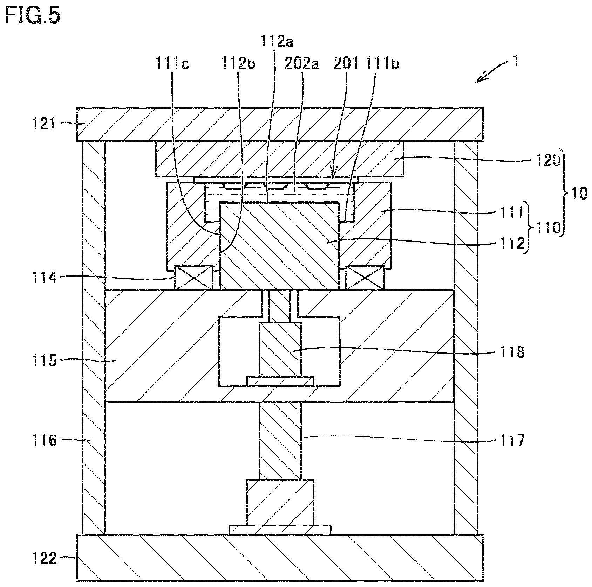

Initially, as shown in Fig. 5, resin material 202a is heated and molten to become molten resin 202a, and second drive mechanism 118 pushes up upper surface 112a of bottom surface member 112 above second surface 11 1b of side surface member 111. At this time, side surface member 111 is pushed down and bottom surface member 112 is pushed up such that elastic member 114 biased toward side surface member 111 by a pressure from first mold 110 toward second mold 120 contracts. Thus, while slide surface 112b of bottom surface member 112 slides with respect to third surface 111c of side surface member 111, bottom surface member 112 moves upward relatively to side surface member 111.

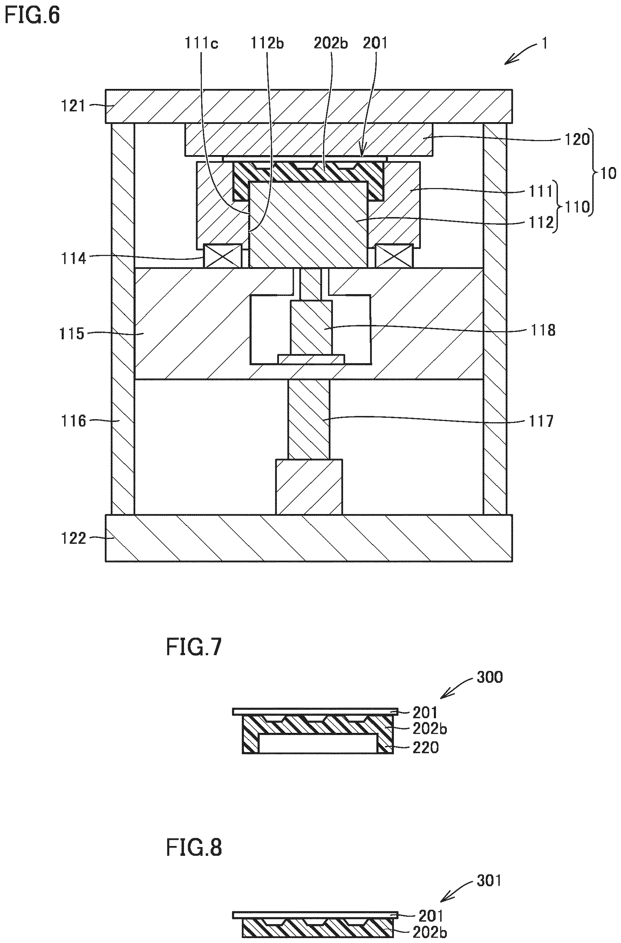

Then, as shown in Fig. 6, while upper surface 112a of bottom surface member 112 is pushed up above second surface 111b of side surface member 111 (on the side of second mold 120), molten resin 202a is further heated and cured to become a cured resin 202b.

Then, as shown, for example, in the schematic cross-sectional view in Fig. 7, a resin-molded object 300 is taken out of compression mold 10. Resin-molded object 300 includes a surrounding portion 220 that extends downward to surround a periphery of a bottom surface. Surrounding portion 220 is in a shape in conformity with first surface 111a and second surface 11 1b of side surface member 111.

Thereafter, when surrounding portion 220 shown in Fig. 7 is an unnecessary portion, a step of removal of unnecessary surrounding portion 220 from object 300 is performed. Thus, a resin-molded product 301 obtained by removing surrounding portion 220 from resin-molded object 300 as shown, for example, in the schematic cross-sectional view in Fig. 8 can also be manufactured.

In resin molding apparatus 1 in the first embodiment, third surface 111c of side surface member 111 is not exposed while resin material 202 is supplied. Therefore, according to resin molding apparatus 1, introduction of the resin in between constituent members of the compression mold can be suppressed without the use of a release film.

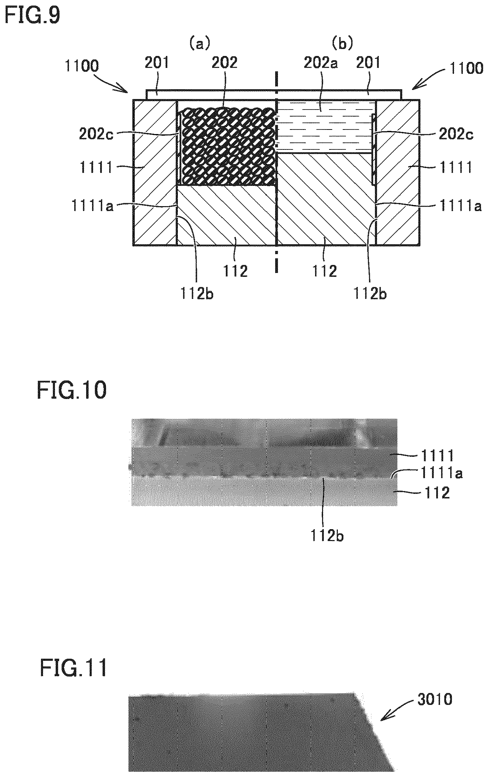

In a conventional resin molding apparatus, an inner peripheral surface 1111a of a side surface member 1111 of a first mold 1100 shown, for example, in the schematic cross-sectional view in Fig. 9 (a) does not include step height 113 as in resin molding apparatus 1 in the first embodiment but extends in a vertical direction (an upward/downward direction). Therefore, in conventional first mold 1100 constructed as such, a resin 202c in contact with inner peripheral surface 1111a of side surface member 1111 is present while resin material 202 is supplied.

Thereafter, during resin molding as shown, for example, in the schematic cross-sectional view in Fig. 9 (b), slide surface 112b of bottom surface member 112 slides over resin 202c that adheres to inner peripheral surface 1111a of side surface member 1111 and moves as drawing resin 202c in between inner peripheral surface 1111a of side surface member 1111 and slide surface 112b of bottom surface member 112.

Therefore, in the conventional resin molding apparatus, after resin 202c drawn in between inner peripheral surface 111 1a of side surface member 1111 and slide surface 112b of bottom surface member 112 is cured, resin residues which cause contamination of the mold or resin flashes which cause defective products by being introduced in a resin-molded product are caused.

Fig. 10 shows a photograph of a portion between inner peripheral surface 1111a of side surface member 1111 and slide surface 112b of bottom surface member 112 after resin molding in the conventional resin molding apparatus including first mold 1100 shown in Fig. 9 (a) and (b). As shown in Fig. 10, black spots corresponding to the resin residues can visually be recognized between inner peripheral surface 1111a of conventional side surface member 1111 and slide surface 112b of bottom surface member 112.

Fig. 11 shows a photograph of a resin-molded product resin-molded with the use of the conventional resin molding apparatus including first mold 1100 shown in Fig. 9 (a) and (b). As shown in Fig. 11, at a periphery of a resin-molded product 3010 resin-molded with the use of the conventional resin molding apparatus, resin flashes that protrude outward from the periphery can visually be recognized.

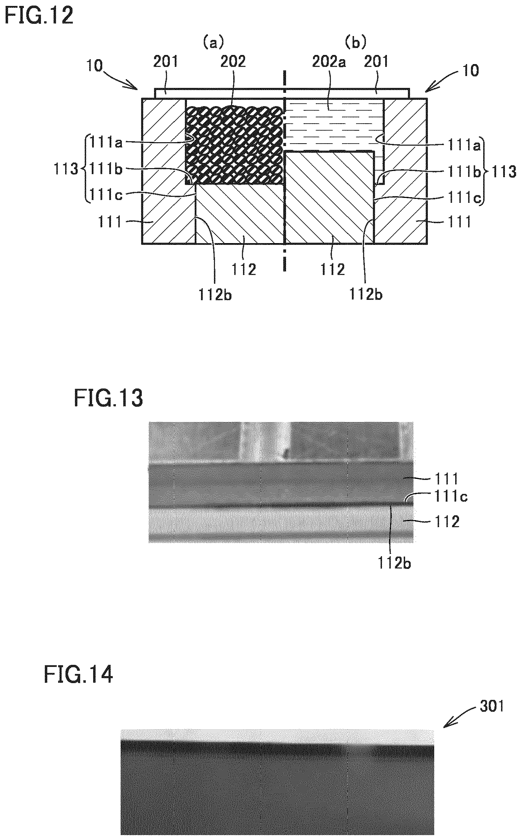

In resin molding apparatus 1 in the first embodiment, on the other hand, as shown, for example, in the schematic cross-sectional view in Fig. 12 (a), third surface 111c of side surface member 111 is not in contact with resin material 202 while resin material 202 is supplied.

Therefore, even when slide surface 112b of bottom surface member 112 moves upward while it slides over third surface 111c of side surface member 111 during resin molding as shown, for example, in the schematic cross-sectional view in Fig. 12 (b), no resin adheres to third surface 111c of side surface member 111 and hence an amount of resin drawn in between third surface 111c of side surface member 111 and slide surface 112b of bottom surface member 112 can clearly be made smaller than in the case of the conventional resin molding apparatus including first mold 1100 shown in Fig. 9 (a) and (b).

Therefore, resin molding apparatus 1 in the first embodiment can allow suppression of introduction of the resin in between constituent members of the compression mold without the use of a release film.

Fig. 13 shows a photograph of a portion between third surface 111c of side surface member 111 and slide surface 112b of bottom surface member 112 after resin molding in resin molding apparatus 1 in the first embodiment. As shown in Fig. 13, no black spot corresponding to the resin residues can visually be recognized between third surface 111c of side surface member 111 and slide surface 112b of bottom surface member 112 of resin molding apparatus 1 in the first embodiment.

Therefore, as is clear from comparison between Figs. 10 and 13, it can be seen that the amount of resin residues can be made smaller in resin molding apparatus 1 in the first embodiment than in the conventional resin molding apparatus described above.

Fig. 14 shows a photograph of a resin-molded product resin-molded with the use of resin molding apparatus 1 in the first embodiment. As shown in Fig. 14, at a periphery of resin-molded product 301 resin-molded with the use of resin molding apparatus 1 in the first embodiment, no resin flash that protrudes outward from the periphery can visually be recognized.

Therefore, as is clear from comparison between Figs. 11 and 14, it can be seen that resin flashes at the periphery of resin-molded product 301 can be less in resin molding apparatus 1 in the first embodiment than in the conventional resin molding apparatus described above.

Description of the present embodiment where two drive mechanisms of first drive mechanism 117 capable of lifting and lowering side surface member 111 and bottom surface member 112 with moving plate 115 being interposed and second drive mechanism 118 capable of lifting and lowering bottom surface member 112 are provided will supplementarily be provided.

For example, a press mechanism capable of lifting and lowering side surface member 111 and bottom surface member 112 only with the use of first drive mechanism 117 without second drive mechanism 118 in the construction in Fig. 2 has been known. In manufacturing of a product (resin-molded product) relatively small in thickness such as a thickness not larger than 2 mm, resin molding can be carried out only with a construction where the press mechanism includes only a single drive mechanism as such. In manufacturing of a product (resin-molded product) relatively large in thickness such as a thickness exceeding 2 mm, however, a distance over which side surface member 111 and bottom surface member 112 slide relatively to each other during resin molding becomes long and appropriate resin molding may not be carried out only by expansion and contraction of elastic member 114 interposed between side surface member 111 and moving plate 115. In such a case, by providing two drive mechanisms (first drive mechanism 117 and second drive mechanism 118) as in the present embodiment, appropriate resin molding can be carried out even when the distance over which side surface member 111 and bottom surface member 112 slide relatively to each other during resin molding becomes relatively long.

In manufacturing of a product (resin-molded product) relatively large in thickness such as a thickness exceeding 2 mm, an area of contact between a mold (for example, first mold 110) and a resin-molded product becomes large. Therefore, adhesive force between the mold and the resin-molded product becomes greater and mold release (taking the resin-molded product out of the mold after resin molding) may become difficult. By providing a drive mechanism capable of driving side surface member 111 and bottom surface member 112 to independently lift or lower at least one of them in such a case, mold release can be facilitated.

An exemplary case will be described. In a mold release operation, only side surface member 111 is lowered to release the resin-molded product and thereafter side surface member 111 is lifted to clamp object 201 as shown in Fig. 4, and then only bottom surface member 112 is lowered to release the resin-molded product. Conversely, only bottom surface member 112 can also be lowered first and thereafter only side surface member 111 can also be lowered to release the resin-molded product.

In manufacturing of a product with a relatively large thickness, use of the release film tends to result in crinkles, which may cause defective molding such as a poor appearance of the resin-molded product. Therefore, the construction provided with two drive mechanisms (first drive mechanism 117 and second drive mechanism 118) as in the present embodiment is particularly effective. In manufacturing of a product (resin-molded product) relatively small in thickness, however, the resin molding apparatus can also be constructed such that side surface member 111 and bottom surface member 112 can be lifted and lowered only with first drive mechanism 117 without second drive mechanism 118 in the construction in Fig. 2.

For the construction including the drive mechanism capable of lifting and lowering first mold 110 described in the present embodiment, second drive mechanism 118 capable of lifting and lowering bottom surface member 112 independently of side surface member 111 is provided separately from first drive mechanism 117. A drive mechanism capable of lifting and lowering side surface member 111 independently of bottom surface member 112, however, can also be provided separately from first drive mechanism 117.

"The third surface of the side surface member not being exposed while the resin material is supplied" herein means that an upper end of the third surface of the side surface member of the resin molding apparatus is flush with an upper end of the slide surface of the bottom surface member or located below the slide surface of the bottom surface member at a time point at least before a time point when supply of the resin material is expected.

### <Second Embodiment>

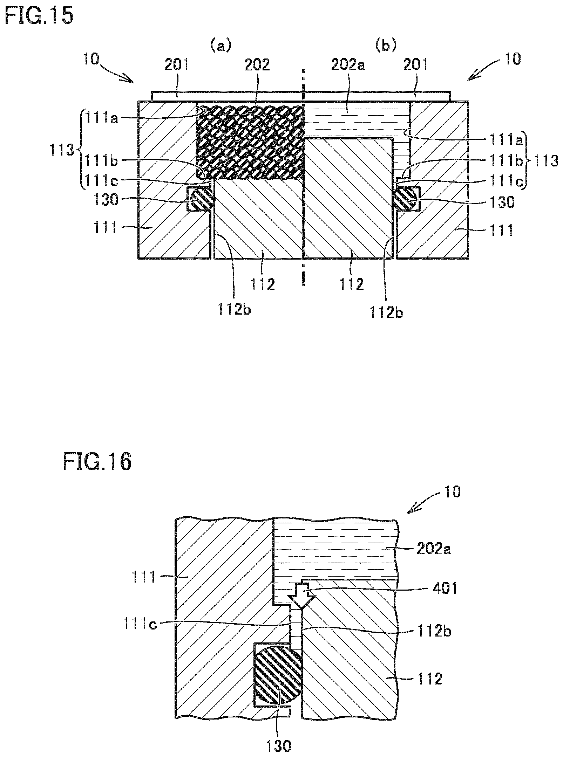

Fig. 15 (a) shows a schematic cross-sectional view of first mold 10 while a resin material is supplied in the resin molding apparatus in a second embodiment which represents another exemplary resin molding apparatus in the embodiment. Fig. 15 (b) shows a schematic cross-sectional view of first mold 10 during resin molding in the resin molding apparatus in the second embodiment. The resin molding apparatus in the second embodiment is characterized in further including a sealing material 130 in third surface 111c of side surface member 111. For example, packing, a gasket, or a resin ring can be employed as sealing material 130. Sealing material 130 may be attached to bottom surface member 112.

Fig. 16 shows a schematic enlarged cross-sectional view of first mold 10 shown in Fig. 15 (b). As shown in Fig. 16, in the resin molding apparatus in the second embodiment, a gap between third surface 111c of side surface member 111 and slide surface 112b of bottom surface member 112 can be filled with sealing material 130 and leakage of molten resin 202a to the gap between third surface 111c of side surface member 111 and slide surface 112b of bottom surface member 112 due to a molding pressure in a direction shown with an arrow 401 can be suppressed.

In manufacturing of a resin-molded product with the use of the resin molding apparatus in the second embodiment, the exemplary method of manufacturing a resin-molded product in the embodiment described above should only include a step of setting sealing material 130 in third surface 111c of side surface member 111 at least before the step of supplying resin material 202 described above.

Since description of the second embodiment is otherwise similar to that of the first embodiment, the description will not be provided.

### <Third Embodiment>

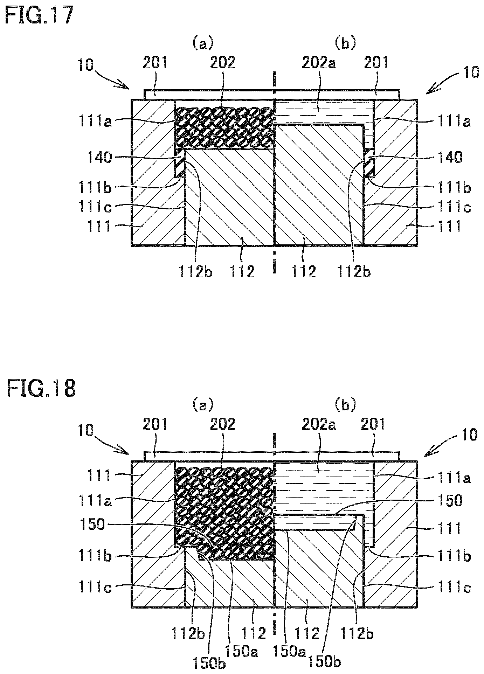

Fig. 17 (a) shows a schematic cross-sectional view of first mold 10 while a resin material is supplied in the resin molding apparatus in a third embodiment which represents yet another exemplary resin molding apparatus in the embodiment. Fig. 17 (b) shows a schematic cross-sectional view of first mold 10 during resin molding in the resin molding apparatus in the third embodiment. The resin molding apparatus in the third embodiment is characterized in further including a consumable 140 arranged between first surface 111a and second surface 11 1b of side surface member 111 and slide surface 112b of bottom surface member 112. For example, paper or rubber can be employed as consumable 140.

In the resin molding apparatus in the third embodiment, an upper surface between third surface 111c of side surface member 111 and slide surface 112b of bottom surface member 112 is covered with consumable140, so that leakage of molten resin 202a to the gap between third surface 111c of side surface member 111 and slide surface 112b of bottom surface member 112 due to a molding pressure can be suppressed.

In manufacturing of a resin-molded product with the use of the resin molding apparatus in the third embodiment, the exemplary method of manufacturing a resin-molded product in the embodiment described above should only include a step of setting consumable 140 between first surface 111a and second surface 11 1b of side surface member 111 and slide surface 111c of bottom surface member 112 at least before the step of supplying resin material 202 described above.

Since description of the third embodiment is otherwise similar to that of the first and second embodiments, the description will not be provided.

### <Fourth Embodiment>

Fig. 18 (a) shows a schematic cross-sectional view of first mold 10 while a resin material is supplied in the resin molding apparatus in a fourth embodiment which represents still another exemplary resin molding apparatus in the embodiment. Fig. 18 (b) shows a schematic cross-sectional view of first mold 10 during resin molding in the resin molding apparatus in the fourth embodiment. The resin molding apparatus in the fourth embodiment is characterized in that a recess 150 is provided in upper surface 112a of bottom surface member 112. Recess 150 includes a flat bottom surface 150a and an inner peripheral surface 150b that extends obliquely upward from a periphery of bottom surface 150a.

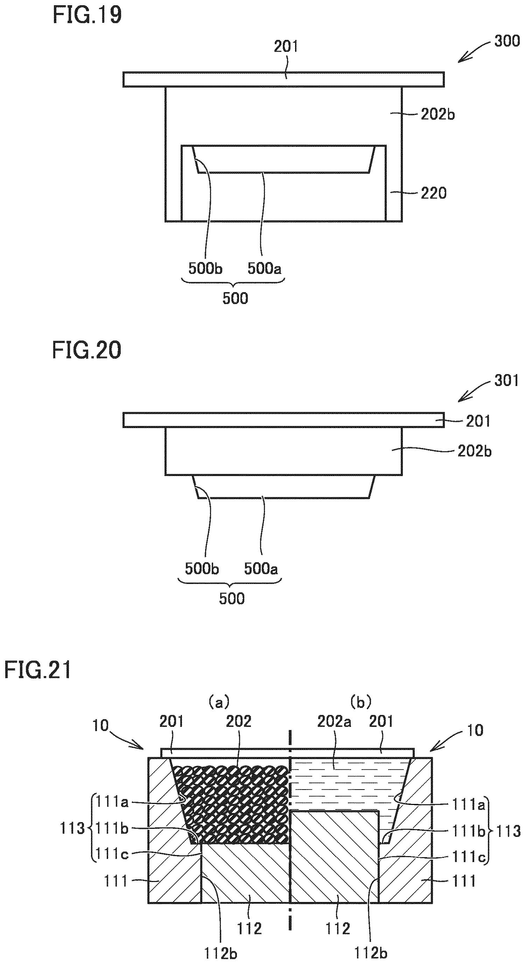

Fig. 19 shows a schematic plan view of object 300 resin-molded with the resin molding apparatus in the fourth embodiment. As shown in Fig. 19, resin-molded object 300 includes a projecting portion 500 in conformity with the shape of recess 150 in upper surface 112a of bottom surface member 112.

As shown in Fig. 19, projecting portion 500 is provided with flat bottom surface 500a. Therefore, in manufacturing of a resin-molded product with the use of the resin molding apparatus in the fourth embodiment, as shown in the schematic plan view in Fig. 20, in removal by cutting of surrounding portion 220 which is an unnecessary portion, the surrounding portion can be removed while flat bottom surface 500a of projecting portion 500 is suctioned to adhere in a stable manner. Therefore, efficiency in manufacturing of resin-molded product 301 can be improved.

In the resin molding apparatus in the fourth embodiment, projecting portion 500 includes an outer peripheral surface 500b inclined with respect to bottom surface 500a. Therefore, resin-molded product 301 can more readily be taken out of compression mold 10.

Though inner peripheral surface 150b of recess 150 is described as being inclined with respect to bottom surface 150a in the fourth embodiment, inner peripheral surface 150b of recess 150 may be perpendicular to bottom surface 150a.

Since description of the fourth embodiment is otherwise similar to that of the first to third embodiments, the description will not be provided.

### <Fifth Embodiment>

Fig. 21 (a) shows a schematic cross-sectional view of first mold 10 while a resin material is supplied in the resin molding apparatus in a fifth embodiment which represents still another exemplary resin molding apparatus in the embodiment. Fig. 21 (b) shows a schematic cross-sectional view of first mold 10 during resin molding in the resin molding apparatus in the fifth embodiment. The resin molding apparatus in the fifth embodiment is characterized in that first surface 111a of side surface member 111 is inclined with respect to second surface 11 1b.

In the resin molding apparatus in the fifth embodiment, first surface 111a of side surface member 111 is inclined with respect to second surface 111b. Therefore, the resin molding apparatus in the fifth embodiment can allow resin-molded product 301 to be taken out more easily from compression mold 10 than the resin molding apparatuses in the first to fourth embodiments where first surface 111a of side surface member 111 is perpendicular to second surface 111b.

Since description of the fifth embodiment is otherwise similar to that of the first to fourth embodiments, the description will not be provided.

Though the embodiments have been described as above, combination of the embodiments described above as appropriate is also originally intended.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### INDUSTRIAL APPLICABILITY

According to the embodiments disclosed herein, a compression mold, a resin molding apparatus, a resin molding system, and a method of manufacturing a resin-molded product can be provided.

### REFERENCE SIGNS LIST

1 resin molding apparatus; 10 compression mold; 110, 1100 first mold; 120 second mold; 111, 1111 side surface member; 111a first surface; 111b second surface; 111c third surface; 112 bottom surface member; 112a upper surface; 112b slide surface; 113 step height; 114 elastic member; 115 moving plate; 116 pillar portion; 117 first drive mechanism; 118 second drive mechanism; 121 upper fixed plate; 122 lower fixed plate; 130 sealing material; 140 consumable; 150 recess; 150a, 500a bottom surface; 150b, 1111a inner peripheral surface; 201 object; 202 resin material; 202a molten resin; 202b cured resin; 202c resin; 220 surrounding portion; 300 resin-molded object; 301, 3010 resin-molded product; 401 arrow; 500 projecting portion; 500b outer peripheral surface; 1000 resin molding system; 1001 resin supply module; 1002 resin molding module; 1003 supply and accommodation module; 1004 controller

## Claims

1. A compression mold comprising:
a first mold; and
a second mold arranged above the first mold as facing the first mold, wherein
the first mold includes a side surface member and a bottom surface member,
the side surface member includes a step height on a bottom surface member side of the side surface member,
the step height includes a first surface of the side surface member, a second surface that extends from the first surface toward the bottom surface member, and a third surface that extends downward from the second surface,
the bottom surface member includes an upper surface where a resin material can be arranged and a slide surface that extends downward from the upper surface and is slidable with respect to the third surface of the side surface member, and
the third surface of the side surface member is not exposed while the resin material is supplied.

2. The compression mold according to claim 1, further comprising a sealing material in the third surface of the side surface member.

3. The compression mold according to claim 1 or 2, further comprising a consumable arranged between the first surface and the second surface of the side surface member and the slide surface of the bottom surface member.

4. The compression mold according to any one of claims 1 to 3, wherein
the first surface of the side surface member is perpendicular to the second surface or inclined with respect to the second surface.

5. The compression mold according to any one of claims 1 to 4, wherein
the upper surface of the bottom surface member is provided with a recess.

6. The compression mold according to claim 5, wherein
the recess includes a bottom surface and an inner peripheral surface that extends upward from the bottom surface, and
the inner peripheral surface is perpendicular to the bottom surface or inclined with respect to the bottom surface.

7. A resin molding apparatus comprising the compression mold according to any one of claims 1 to 6.

8. The resin molding apparatus according to claim 7, further comprising a drive mechanism that lifts and lowers the first mold, wherein
the drive mechanism lifts and lowers one of the side surface member and the bottom surface member independently of the other.

9. A resin molding system comprising the resin molding apparatus according to claim 7 or 8.

10. A method of manufacturing a resin-molded product, the method comprising:
preparing a compression mold, the compression mold including a first mold and a second mold arranged above the first mold as facing the first mold, the first mold including a side surface member and a bottom surface member, the side surface member including a step height on a bottom surface member side of the side surface member, the step height including a first surface of the side surface member, a second surface that extends from the first surface toward the bottom surface member, and a third surface that extends downward from the second surface, the bottom surface member including an upper surface where a resin material can be arranged and a slide surface that extends downward from the bottom surface and is slidable with respect to the third surface of the side surface member;
setting an object on the second mold;
supplying a resin material while the third surface of the side surface member is not exposed; and
resin-molding the object with the resin material.

11. The method of manufacturing a resin-molded product according to claim 10, wherein
in the resin-molding the object, the object is resin-molded with the upper surface of the bottom surface member being lifted above the second surface of the side surface member.

12. The method of manufacturing a resin-molded product according to claim 10 or 11, further comprising setting a sealing material in the third surface of the side surface member at least before the supplying a resin material.

13. The method of manufacturing a resin-molded product according to any one of claims 10 to 12, further comprising setting a consumable between the first surface and the second surface of the side surface member and the slide surface of the bottom surface member at least before setting a resin material.

14. The method of manufacturing a resin-molded product according to any one of claims 10 to 13, further comprising removing an unnecessary portion from the resin-molded object.
